# EUROPEAN PATENT SPECIFICATION

(11) **EP 2 964 362 B1**
(45) Date of publication and mention of the grant of the patent: **23.08.2017**
(21) Application number: 14708643.3
(22) Date of filing: 11.02.2014
(51) Int. Cl.: B01D 35/153, B01D 37/02

(54) **A DISPENSING DEVICE OF AN ADDITIVE FOR FILTER GROUPS OF INTERNAL COMBUSTION ENGINES**
ADDITIVABGABEVORRICHTUNG FÜR FILTERGRUPPEN VON VERBRENNUNGSMOTOREN
DISPOSITIF DE DISTRIBUTION D'UN ADDITIF DESTINÉ À DES GROUPES FILTRANTS DE MOTEURS À COMBUSTION INTERNE

(30) Priority: 04.03.2013 IT RE20130015
(43) Date of publication of application: 13.01.2016
(73) Proprietor: Ufi Filters s.p.a., 46047 Porto Mantovano (Mantova) (IT)
(72) Inventor: GIRONDI, Giorgio, I-46100 Mantova (IT)
(74) Representative: Corradini, Corrado
(86) International application number: PCT/IB2014/000148
(87) International publication number: WO 2014/135935

(56) References cited:
- US-A1- 2002 195 380
- US-A1- 2009 206 024

## Description

### TECHNICAL FIELD

The present invention relates to a supply device of an additive for filter groups for internal combustion engines, a filter cartridge comprising the device and a relative filter group.

In more detail, the invention relates to a dispensing device of an additive, the additive/s in question being suitable for improving a quality of fuel to be supplied to the internal combustion engine, in terms of lubricating quality and/or anti-corrosion and like properties, which can be integrated into the filter group of the fuel.

### PRIOR ART

Dispensing devices are known of an additive for fuel which are associated to the filter group of the fuel.

These dispensing devices comprise a variable-volume tank able to contain an additive to be injected in the fuel, for example downstream of the filtering stage thereof.

A dispensing device of the additive branches from the tank, and between the tank and the conduit, for example, a first check valve is interposed such as to prevent the tank from filling with fuel.

Further, it is known to locate a further check valve for intercepting the conduit, provided with elastic means which limit aperture thereof, which valve is interposed between the first check valve and the free end of the conduit.

The further check valve has the function of limiting the exit of the additive.

Further, as is known, the filter groups comprise an external casing provided with an inlet of the fuel to be filtered and an outlet of the filtered fuel and within which a filter cartridge is contained, for example tubular, which is able to intercept the flow of fuel crossing the casing from the inlet to the outlet.

The tank of the dispensing device can be placed in communication with the internal environment of the casing upstream of the filter cartridge such that the additive is substantially at the same pressure as the fuel to be filtered upstream of the filter cartridge (in the case of flow from outside toward inside of the filter cartridge the device has to be in communication with the external environment or, in relation to the type of the additive, it can be injected downstream of the filter cartridge).

The conduit of the dispensing device, on the other hand, is able to open into the environment downstream of the cartridge, such as to inject doses of additive directly into the filter cartridge.

When there is an increase in fuel pressure upstream of the filter cartridge, for example because the filter wall of the cartridge is blocked up, the tank is compressed by a proportional quantity to the difference in pressure between the environment upstream and the environment downstream of the filter cartridge and a corresponding dose of additive is released into the fuel downstream of the filter cartridge.

A drawback encountered in the known dispensing devices is linked to the fact that even in the presence of the further check valve they dispense a quantity of additive that is proportional to the pressure difference of the fuel between the environment upstream of the filter cartridge and the environment downstream thereof, with a consequent high consumption of additive, for example in a case of sudden pressure peaks, especially at the end of the filter cartridge's working life.

In an attempt to reduce this effect, systems are known that use commanded actuators programmed to parcel out the consumption of the additive, but are particularly complex and expensive to use.

Examples of known dispensing devices are shown in documents D1: US 2009/206024 and D2: US 2002/195380.

An aim of the present invention is to obviate the above-mentioned drawbacks in the prior art, with a solution that is simple, rational and relatively inexpensive.

The aims are attained by the characteristics of the invention reported in the independent claim. The dependent claims delineate preferred and/or especially advantageous aspects of the invention.

### DISCLOSURE OF THE INVENTION

The invention in particular discloses a dispensing device of an additive for a filter groups of internal combustion engines, comprising a variable-volume tank able to contain an additive from which a conduit for dispensing the additive branches, characterised in that it comprises at least a porous membrane having a fixed depth internally of the conduit and able to intercept the flow of additive being dispensed from the tank.

Owing to the tortuous channelings it is constituted by, the porous depth membrane enables a slowing down of the exit of the additive, defining a forced passage for the additive which is at the same time micronized, i.e. separated into small drops, enabling a slowed constant flow which reduces the consumption thereof and improves the dispersion thereof into the filtered fluid and the efficiency, differently to what occurs with the use of check valves in which the flow of additive is substantially intermittent.

Further, thanks to this solution it is easily possible to integrate the dispensing device in all the filter groups already available.

Further, in an aspect of the invention, the porous membrane is constituted by a small cylinder of porous material the height of which is greater than the radius of the base.

In this way the above objectives can be attained by means of a simple and economical structure without any need to increase (indeed possibly minimising) the number of components of the dispensing device.

In a further aspect of the invention, the conduit comprises at least a radial opening interposed axially between the porous membrane and the free end of the conduit, the radial opening being associated to means for varying a passage section thereof.

With this solution, by varying the opening section it is possible to regulate the pressure difference at the heads of the porous membrane, inversely proportionally to the pressure difference existing at the heads of the filter membrane of the filter group.

The conduit is advantageously slidably inserted in a fixed cannula provided with at least a radial window able to be at least partially superposed on the radial opening, the conduit being mobile with respect to the cannula between a first position, in which the radial opening is substantially completely superposed on the radial window, and a second position, in which the radial opening is only partly superposed on the radial window.

In a further aspect of the invention, a filter cartridge is disclosed for filter groups of internal combustion engines which comprises a filter wall having a tubular shape, opposite ends of which are fixed to respective annular support plates, and comprising a dispensing device, as described above either of the traditional type (for example in which in the place of the porous membrane a valve is included, or, more generally, a control means of the flow of additive); in which the dispensing device is removably fixed to at least one of the support plates such that the free end of the conduit opens internally of the toroidal wall, the porous membrane (or the control means of the flow of additive) being configured such as to generate a load loss of the additive crossing it greater than the load loss generated in the filter fluid by the filter cartridge.

With this solution the exit of additive from the tank can be reliably limited, defining a forced passage for the additive that is also micronised at the same time, i.e. separated into small drops, enabling a slowed and constant flow which reduces consumption and improves the dispersion and efficiency thereof into the filtered fluid, differently to what happens with the use of check valves in which the flow of additive is substantially intermittent.

The radial opening of the conduit advantageously also opens internally of the toroidal wall i.e. into the second chamber.

In practice the flow of fluid that from the second chamber enters the radial opening (variable-section) defines a variation in pressure downstream of the porous membrane (or the control means of the flow of additive) that is destined to influence the flow of additive through the porous membrane (or the control means of the flow of additive).

The tank advantageously comprises an annular abutment provided with a salient hollow shank from which the conduit branches and which is inserted internally of one of the annular plates

In a preferred embodiment of the invention the annular abutment is fixed to the annular plate.

In an alternative embodiment of the invention, the hollow shank is slidably inserted in one of the annular plates, the tank being mobile between a neared position, in which the annular abutment is substantially neared to the annular plate, and a distanced position, in which the annular abutment is substantially distanced from the annular plate. In this embodiment, the filter cartridge advantageously comprises elastic means interposed between the annular abutment and the annular plate, the tank being mobile from the distanced position to the neared position in opposition to the elastic means.

In practice, the elastic means offer a predetermined resistance to the motion of the tank with respect to the filter cartridge, enabling an elastic response to the eventual increase in pressure of the fluid to be filtered upstream of the filter wall.

Further, the cannula is inserted internally of the other of the support plates and is constrained thereto axially, removably and substantially sealedly.

Thanks to this solution, the variation of the passage section of the radial opening passage is commanded by the reciprocal motion between the filter cartridge and the dispensing device.

In a further aspect of the invention a filter group is provided, which comprises an external casing provided with at least an inlet for a fluid to be filtered, an outlet for the filtered fluid and a filter cartridge, as detailed above, contained internally of the casing and able to divide the internal volume of the casing into a first chamber external of the filter wall and communicating with the inlet and a second chamber internal of the filter wall communicating with the outlet. The tank of the dispensing device is contained in the first chamber.

With this solution, apart from the above-defined advantages, it is possible to realize a compact and functional filter group, in which the dispensing device is integrated internally of the casing.

In a preferred embodiment the outlet of the fluid from the casing exhibits a variable section.

With this solution, the overall load loss of the filter group can be regulated acccording to the degree of blocking of the filter wall and/or the fluid flow rate in inlet to the casing.

In an alternative embodiment, the conduit of the dispensing means and the cannula define a channel of the casing which opens directly into the outlet of the casing.

In this way it is possible to rebalance the pressure difference on either side of the porous membrane (or the control means of the flow of additive), making it substantially constant, even following an increase in the pressure difference on either side of the filter wall of the filter cartridge.

### BRIEF DESCRIPTION OF THE DRAWINGS

Further characteristics and advantages of the invention will emerge from a reading of the following description provided by way of non-limiting example, with the aid of the figures illustrated in the accompanying tables of drawings.
Figure 1 is a view in longitudinal section of a first embodiment of a filter group of the invention.
Figure 2 is a view in longitudinal section of a second embodiment of a filter group of the invention, with the dispensing device in a distanced position.
Figure 3 is a view of the filter group of figure 2, with the dispensing device in a neared position.
Figure 4 is a larger-scale view of detail IV of figure 2.
Figure 5 is a larger-scale view of detail V of figure 3.
Figure 6 is an exploded view of the filter cartridge and the dispensing device of the second embodiment.
Figure 7 is a longitudinal section view of a third embodiment of a filter group according to the invention, with the filter cartridge in a lowered position.
Figure 8 is a view of the filter group of figure 2, with the filter cartridge in a raised position.
Figure 9 is a larger-scale view of detail IX of figure 7.
Figure 10 is a larger-scale view of detail X of figure 9.
Figure 11 is an exploded view of the filter cartridge and the dispensing device of the third embodiment.

### BEST WAY OF CARRYING OUT THE INVENTION

With particular reference to the figures of the drawings, 10 denotes in its entirety a filter group for internal combustion engines for filtering fuel, such as for example diesel, lubricant or a like fluid.

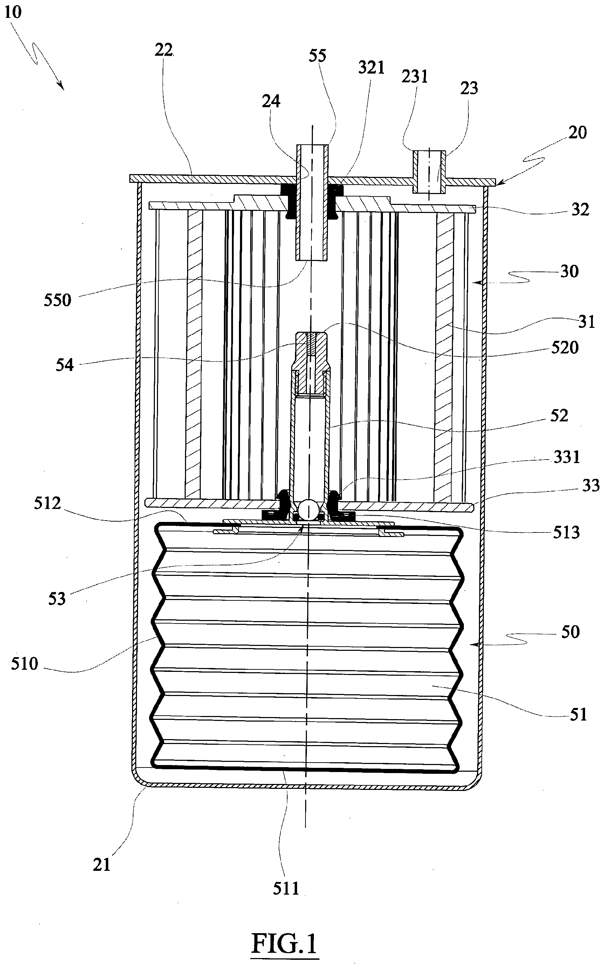

In a first embodiment, illustrated in figure 1, the filter group 10 comprises an external casing, denoted in its entirety by 20, which is formed by a body 21 conformed substantially in a beaker shape superiorly closed by a lid 22, for example circular, and fixed removably to the beaker body 21 by means of locking screws or another blocking means.

The lid 22 comprises an inlet 23 for the fluid to be filtered, for example defined by an off-centre through-hole made in the lid, in which an inlet cannula 231 is sealedly inserted.

The lid 22 further comprises an outlet 24 for the fluid to be filtered, for example defined by a through-hole coaxial with the beaker body 21 and made in the lid 22.

A filter cartridge denoted in its entirety by reference numeral 30 is housed internally of the casing.

The filter cartridge 30 comprises a filter wall 31 having a tubular shape, in the example a pleated wall (it is possible however that it can be of the depth type), which delimits an internal through-cavity in which a support core (not shown) might be inserted, provided with radial openings for the passage of diesel fuel.

Between the filter wall 31 and the beaker body 21 an external volume is defined, which can be placed in communication with the inlet 23 of the fluid to be filtered. Further, the filter wall 31 delimits an internal volume which can be placed in communication with the outlet 24.

The filter wall 31 comprises two support plates of annular shape, generally realized in plastic, of which an upper support plate 32 and a lower support plate 33, which are coaxially fixed to the opposite ends of the filter wall 31. The upper support plate 32 comprises a first annular seal 321 able to surround the inner edge of the lower support plate 33.

The lower support plate 33 also comprises a second annular seal 331 able to surround the inner edge of the lower support plate 33.

A dispensing device of an additive for the fluid to be filtered, denoted in its entirety by reference numeral 50, is housed internally of the casing 20.

The dispensing device 50 is fixed to the filter cartridge 30, for example removably or glued thereto, as will more fully appear in the following, such as to be a component of the filter cartridge itself (removable and insertable from the casing 20 joined thereto).

The dispensing device 50 comprises a variable-volume tank 51, for example provided with at least a collapsible wall 510 and locatable for example inferiorly of the filter cartridge 50.

In practice the tank 50 is substantially cylindrical and provided with a substantially-cylindrical bottom wall 511 (and substantially rigid or undeformable), for example provided with a filling hole closed by a closing element, a substantially-tubular lateral wall 510, which emerges from the bottom wall 511 and is axially deformable, for example substantially bellows-shaped, and a top wall 512 (substantially rigid or undeformable) which superiorly closes the lateral wall 510 and exhibits a substantially annular wall, defining a central hole for passage of the additive.

A gap is defined between the tank 50 (in particular the bottom wall 511 thereof) and the beaker body 21 (in particular the bottom wall thereof), which gap prolongs the first chamber so that in use it is filled by the fluid to be filtered.

The top wall 512 is coaxially fixed to the lower support plate 33.

A hollow shank 513 extends from the top wall 512, which shank 513 axially prolongs the central hole of the top wall 512, which in turn is prolonged by a conduit 52, for example axial, open at the free end 520 thereof, and inserts internally of the first chamber, passing through the central hole of the lower support plate 32.

In practice, the conduit 52 sets the internal volume of the tank 51 in communication with the volume external thereof. The conduit 52 for example comprises a truncoconical tapered end associated, for example removably, to a first substantially cylindrical base section.

The first base section, like the hollow shank 513, can be inserted internally of the central hole of the lower support plate 33, in practice internally of the third annular seal 331, such as to compress the seal 331 radially between the lower support plate 33 and the hollow shank 513 itself.

A check valve 53 is arranged between the conduit 52 and the tank 51, in particular internally of the hollow shank 513, which check valve 53 comprises for example a ball obturator which is able to open, opposingly to the elastic thrust means (not illustrated) or simply by force of gravity, a passage opening which sets the tank 51 in communication with the conduit 52.

The device 50 comprises a porous depth membrane 54 fixed to the conduit 52 and able to intercept the internal cavity thereof.

For porous depth membrane is intended every material comprising pores distributed on the depth of said material, wherein said pores communicate each other, creating narrow and tortuous paths, with a certain length, said paths passing said membrane; through said paths, the porous depth membrane can be crossed by a fluid, continuously, with a flow resistance (loss of pressure) resulting from the paths dimension and length, as well as from the pressure and viscosity of the fluid crossing the membrane.

The porous depth membrane can be realized in several ways and materials, for example it can be composed of a sintered plastic or metallic material or of a nonwoven comprising polymeric or metallic fibers.

Moreover, the porous depth membrane can comprise two or more layers, one in series of the other, wherein at least a layer comprises pores distributed on the depth of said material, wherein said pores communicate each other, creating narrow and tortuous paths, with a certain length, said paths passing said membrane; according to an alternative embodiment of the present invention, the porous depth membrane is composed of a monolithic body comprising pores distributed on the depth of said material, wherein said pores communicate each other, creating narrow and tortuous paths, with a certain length, said paths passing said membrane.

On the embodiments shown on figures, the porous membrane 54 is realised by a small cylinder of porous material, for example the height of which is greater than the base radius thereof.

In the preferred illustrated example, the height of the porous membrane 54 is greater than the base diameter.

For example, the material of which the porous membrane is realized is able to resist temperatures of higher than 120-130°C.

The porous membrane 54, in practice, is able to define a passage for the additive which is at the same time micronized, i.e. separated into small drops, enabling a slow constant flow which reduces the consumption and improves the dispersion thereof in the filtered fluid and the efficiency thereof.

The porous membrane 54 is inserted internally of the conduit 52 and fixed there (for example by gluing of the perimeter edge thereof to the internal walls of the conduit 52 or rested and glued on an annular shelf deriving internally of the conduit).

For example, the porous membrane 54 is positioned at the tapered free end 520 of the conduit 52, which is for example defined by a connector removably fixed to the conduit.

The porous wall 54 is configured such as to generate a load loss in the additive which crosses it that is greater than the load loss generated in the fluid being filtered by the filter wall 31 of the filter cartridge 30.

The filter group 10 comprise an outlet cannula 55 which is inserted substantially snugly and sealedly internally of the central hole of the upper support plate 32, in practice internally of the first annular seal 321, such as to compress the seal 321 radially between the upper support plate 32 and the outlet cannula 55, which is solidly constrained to the filter cartridge 30 (although it is removably associated thereto).

The outlet cannula 55 is advantageously insertable substantially snugly and sealedly internally of the outlet 24, such as to set the second chamber (internal of the filter wall 31) in communication with the external volume of the casing 20.

In the example, the outlet cannula 55 is directly fixed to the lid 22, projects internally of the casing for a longitudinal tract and, inserting internally of the first annular seal 321, opens with the free lower end 550 internally of the second chamber.

For example, the free end 520 of the conduit 52 faces, at a distance, the free end 550 of the outlet cannula 55, for example axially aligned.

In the light of the above, the functioning of the filter group 10 according to the first embodiment is the following. The fluid to be filtered enters the casing 20 through the inlet 23 and fills the first chamber defined externally of the filter wall 31 and the tank 51.

The fluid in the first chamber is at a pressure P1 which depends on various functioning parameters of the internal combustion engine.

The fluid is forced to flow through the filter wall 31 such as to be filtered and to pass into the second chamber defined internally of the filter cartridge 30.

In the second chamber, the fluid is at a pressure P2 that is lower than the pressure P1, by a quantity depending, among other constructive design parameters of the filter wall 31, also on the degree of blocking of the filter wall.

In practice, the greater the degree of blocking of the filter wall 31, the greater the pressure difference (P1-P2) of the fluid between the first chamber and the second chamber.

The fluid additive which fills the tank 51 is at a pressure P3, which is normally substantially the same as P1.

Each time a pressure P1 increase is generated in the first chamber, greater than a determinable pressure value, for example each time the filter wall 31 increases the degree of blockage thereof (and thus the pressure difference P1-P2 increases) and/or the fluid to be filtered increases the density thereof and/or the flow rate thereof, this increase in pressure causes a contraction of the tank 51 by a determined volume, which corresponds to the quantity of additive released into the fluid filtered through the porous membrane 54.

The porous membrane 54 is dimensioned so as to provide a fluid-dynamic resistance that is such as to limit the flow of additive released, in practice acting as a pressure damper preventing a linear proportion between the pressure difference P1-P2 across the filter wall 31 and the pressure difference P3-P2 between the additive contained in the reservoir 51 and the fluid (with additive added) contained in the second chamber and exiting from the casing 20 through the outlet 24.

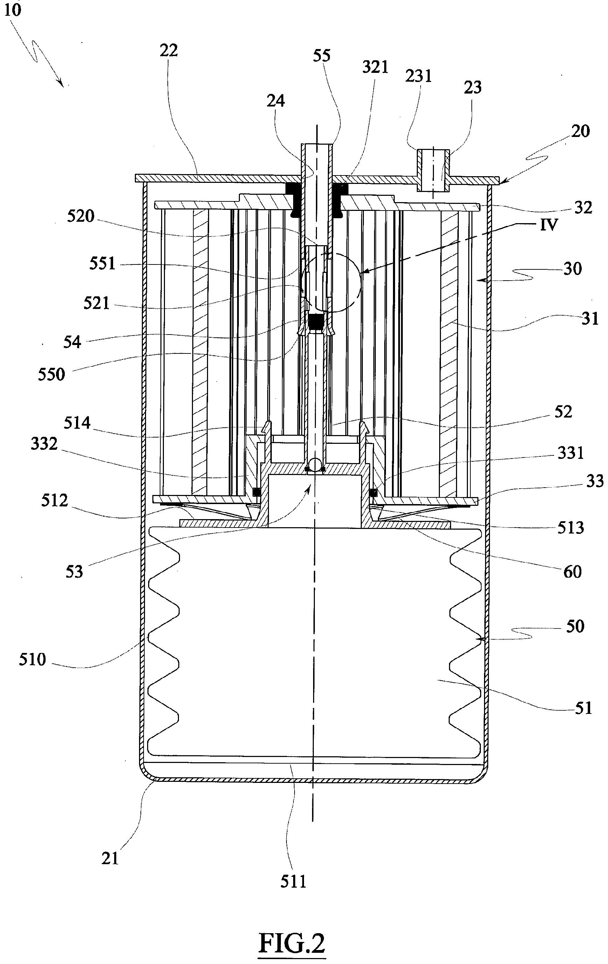

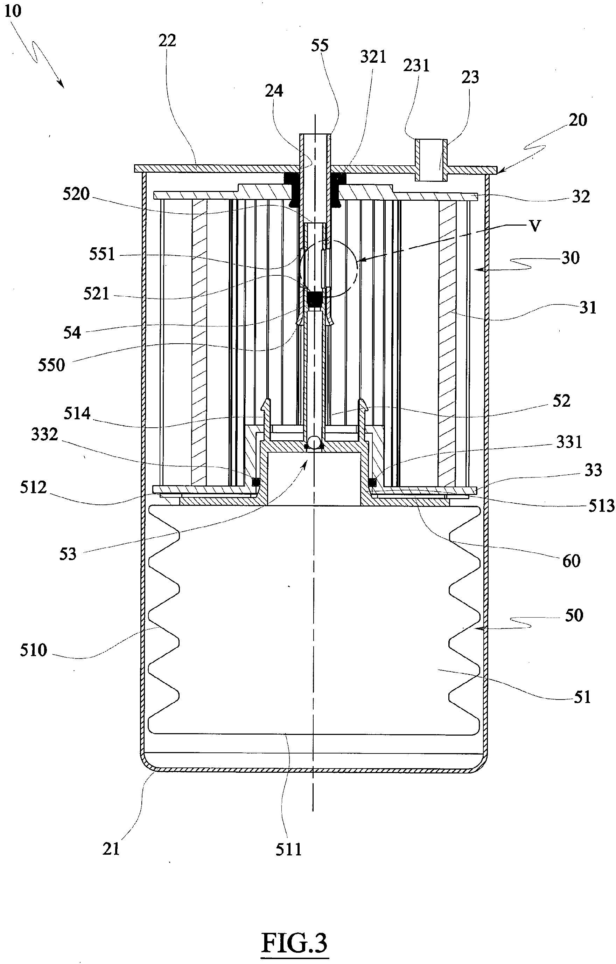

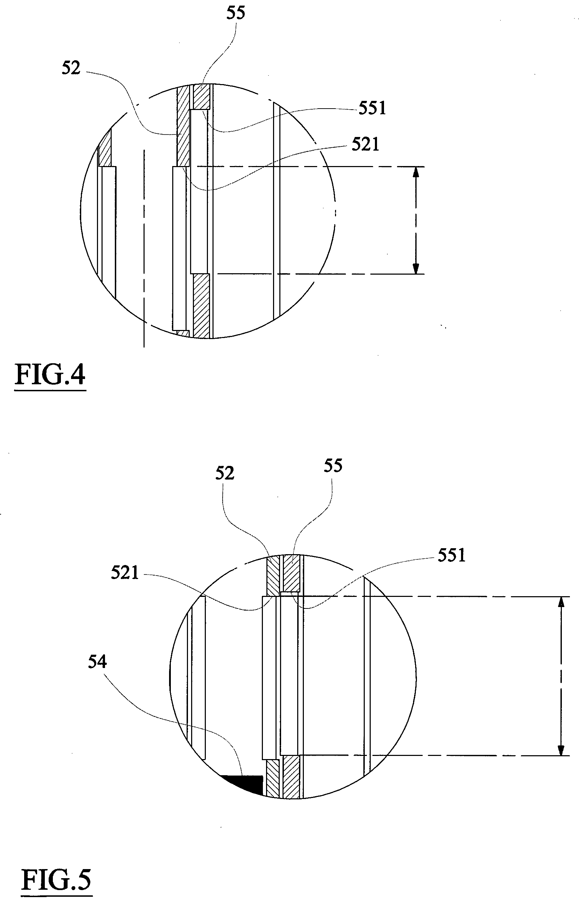

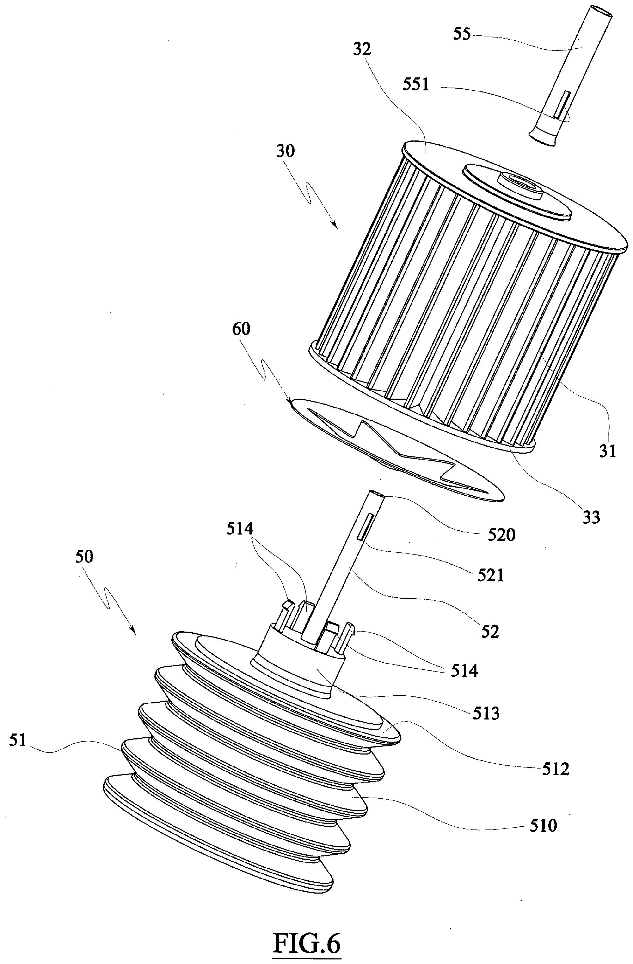

In a second embodiment, shown in figures 2 to 6 (in which the reference numbers for the common parts are left unchanged), the filter group 10 comprises an outer casing, denoted in its entirety by 20, which is formed by a substantially beaker-shaped body 21 closed at the top by a lid 22, for example circular, and removably fixed to the beaker-shaped body 21 by means of clamping screws or other suitable blocking means.

The lid 22 includes an inlet 23 for the fluid to be filtered, for example defined by an off-centre through-hole made in the lid itself, in which an inlet cannula 231 is sealedly engaged.

The lid 22 also comprises an outlet 24 for the fluid to be filtered, for example defined by a through-hole coaxial with the beaker-shaped body 21 and made in the cover itself.

A filter cartridge, denoted by reference numeral 30, is accommodated inside the housing 20.

The filter cartridge 30 includes a tubular filter wall 31, in this case a pleated membrane (however, it could be a depth-type), which delimits an internal cavity in which a support core (not shown) could be inserted, which membrane is provided with radial openings for the passage of diesel.

An external volume is defined between the filter wall 31 and the beaker body 21, which external volume can be placed in communication with the inlet 23 of the fluid to be filtered. The filter wall 31 further delimits an internal volume destined to be placed in communication with the outlet 24. The filter cartridge 30 comprises two annular support plates, generally made of plastic, of which an upper support plate 32 and a lower support plate 33, which are coaxially fixed to the opposite ends of the filter wall 31.

The upper support plate 32 includes a first annular gasket 321 which can surround the internal edge of the upper support plate 32.

The lower support plate 33 further includes a second annular seal 331 surrounding the inner edge of the lower support plate 33.

In addition, the lower support plate 33 comprises an internal shank 332 which is also hollow and extends coaxially and internally of the filter wall 31 for a limited axial length thereof.

A delivery device of an additive for the fluid to be filtered, denoted by reference numeral 50, is also housed inside the casing 20.

The dispensing device 50 is removably coupled to the filter cartridge 30, as will become apparent in the following, so as to constitute a component of the filter cartridge itself (removable and insertable from and into the casing 20 with the filter cartridge), although it is removably fixed thereto.

The dispensing device 50 comprises a variable-volume tank 51, for example provided with at least a collapsible wall 510 that can be placed, for example, below the filter cartridge 50.

In practice, the tank 50 is substantially cylindrical and has a substantially circular bottom wall 511 (or substantially rigid and non-deformable), for example provided with a filler opening closed by a closing element, a substantially tubular lateral wall 510, which rises from the bottom wall 511 and is axially deformable, for example is substantially bellows-shaped, and a top wall 512 (substantially rigid or undeformable), which superiorly closes the side wall 510 and has a substantially annular shape, defining a central passage hole of the additive.

A gap is defined between the tank 50 (in particular the bottom wall 511 thereof) and the beaker-shaped body 21 (in particular the bottom wall thereof), which gap prolongs the first chamber and is filled by the fluid to be filtered.

A hollow shank 513 emerges from the top wall 512, which axially prolongs the central wall of the top wall 512, which is in turn extended by a conduit 52, for example coaxial, open at the free end thereof.

In practice, the conduit 52, which inserts into the second chamber through the central hole of the lower support plate 33, sets the inner volume of the tank 51 in communication with the volume external thereof.

The hollow shank 513 is insertable inside the central hole of the lower support plate 33, in practice internally of the second annular seal 331, so as to compress the second annular seal 331 between the lower support plate 33 and the hollow shank 513.

Further, a plurality of coupling teeth 514 are defined at the top of the hollow shank 513 which coupling teeth 514 are for example arrowhead-shaped and radially deformable, a surface of which teeth 514 facing the hollow shank 513 defines an anti-unscrewing abutment surface of the hollow shank from the lower support plate 33. The abutment surface is able to come into contact with the upper surface of the inner shank 332 of the lower support plate 33, once they have been inserted in the inner shank 332.

Advantageously, the distance (axial) between the surface facing the hollow shank 513 of the coupling teeth 514 and the top wall 512 of the tank 51 is greater than the distance (axial) between the upper surface of the inner shank 332 and the lower surface of the lower support plate 33, so as to enable the top wall 512 of the tank 51 a certain axial travel, once the hollow shank 513 is inserted into the inner shank 332 of the lower support plate 33.

The tank 51, therefore, is mobile between a neared position, in which the top wall 512 is substantially neared to the lower support plate 33, and a distanced position, in which the top wall 512 is substantially distanced from the lower support plate 33, in practice; in this distanced position the surface of the hooking teeth 514 facing the hollow shank 513 is in contact with the upper surface of the inner shank 332 of the lower support plate 33.

The filtration assembly 10 further comprises elastic means, for example of the spring type (in the illustrated example a belleville washer 60).

The belleville washer 60 is for example annular, and for example is provided with a plurality of flexible blades that extend internally from an external circular crown. The washer 60 is interposed between the top wall 512 and the lower support plate 33, in practice is inserted on the hollow shank 513.

When it is moved from the retracted position to the neared position, the tank 51 is able to compress the washer 60 in contrast to the resisting force thereof.

A check valve 53 is arranged between the conduit 52 and the tank 51, in particular between the conduit 52 and the hollow shank 513, which check valve 53 comprises for example a ball shutter which in contrast to elastic thrust means (not shown) or by force of gravity can open a passage setting the tank 51 and the conduit 52 in communication.

The device 50 preferably comprises a porous depth membrane 54 fixed to the conduit 52 and able to intercept the internal cavity thereof.

For porous depth membrane is intended every material comprising pores distributed on the depth of said material, wherein said pores communicate each other, creating narrow and tortuous paths, with a certain length, said paths passing said membrane; through said paths, the porous depth membrane can be crossed by a fluid, continuously, with a flow resistance (loss of pressure) resulting from the paths dimension and length, as well as from the pressure and viscosity of the fluid crossing the membrane.

The porous depth membrane can be realized in several ways and materials, for example it can be composed of a sintered plastic or metallic material or of a nonwoven comprising polymeric or metallic fibers.

Moreover, the porous depth membrane can comprise two or more layers, one in series of the other, wherein at least a layer comprises pores distributed on the depth of said material, wherein said pores communicate each other, creating narrow and tortuous paths, with a certain length, said paths passing said membrane; according to an alternative embodiment of the present invention, the porous depth membrane is composed of a monolithic body comprising pores distributed on the depth of said material, wherein said pores communicate each other, creating narrow and tortuous paths, with a certain length, said paths passing said membrane.

On the embodiments shown on figures, the porous membrane 54 is realized by a small cylinder of porous material, the height of which is for example greater than the base radius thereof.

In the preferred embodiment illustrated, the height of the porous membrane 54 is greater than the diameter of the base. For example, the material of which the porous baffle 54 is made can withstand temperatures of higher than 120-130°C.

In practice, the porous membrane 54 is able to define a tortuous passage for the additive that is micronized, i.e. separated into small droplets, enabling at the same time a constant and limited outflow which results in lower consumption and improves the dispersion in the filtered fluid and the efficiency.

The porous membrane 54 is inserted inside the conduit 52 and fixed therein (for example by gluing of the peripheral edge thereof to the inner walls of the conduit 52 or rested and glued on an annular shelf fashioned internally of the conduit).

For example, the porous membrane 54 is positioned at an intermediate portion of the conduit 52 interposed axially between the end thereof constrained to the hollow shank 513 - i.e. where the check valve 53 is positioned - and the free end 520 thereof.

The porous membrane 54 is configured such as to generate a pressure drop in the additive crossing it that is greater than the pressure loss generated in the fluid under filtration by the filter wall 31.

The delivery device 50 of this second embodiment, as an alternative to the porous membrane 54, might be provided with a valve, for example a check valve attached to the conduit 52, the obturator of which can occlude the inner cavity thereof and open in contrast with elastic means (spring or elastic deformation of the obturator).

In practice, although totally different in its modalities and functioning, the porous membrane 54 and the valve are able to define means for controlling the output flow of additive from the conduit 52, which are configured so as to generate a load loss in the additive crossing through that is greater than the pressure drop generated in the fluid under filtration by the filter wall 31.

In particular, the conduit 52 further comprises at least a radial opening 521 (in the example two in number and diametrically opposite), for example of elongate shape with the longitudinal axis thereof parallel to the axis of the conduit 52. The radial opening 52 is axially interposed between the porous membrane 54 and the free end 520 of the conduit 52, so as to be located downstream of the porous membrane 54 in the sliding direction of the additive 51 in output from the tank via the conduit 52.

The dispensing device 50 comprises an outlet cannula 55 which is inserted substantially snugly and sealingly internally of the central hole of the upper support plate 32, in practice internally of the first annular gasket 321, so as to radially compress the gasket 321 between the upper support plate 32 and the outlet cannula 55, which cannula 55 is solidly constrained to the filter cartridge 30 (though removably associated thereto).

The cannula outlet 55 is further advantageously insertable substantially snugly and sealedly within the outlet 24, in order to set the second chamber (inside the filter wall 31) in communication with the volume external of the casing 20. In the example the outlet cannula 55 is directly fixed to the cover 22, protrudes inside the casing over a longitudinal section and, inserting into the first annular gasket 321, opens with the free lower end 550 thereof internally of the second chamber.

The outlet cannula 55 comprises at least a radial window 551 (in the example two in number and diametrically opposite), for example of elongate shape with the longitudinal axis thereof parallel to the axis of the portion inserted in the filter cartridge 30 of the outlet cannula 55 and having dimensions and shape that are substantially equal to the dimensions and shape of the radial opening 521.

The radial window 551 is axially interposed between the free lower end 550 of the outlet cannula 55 and the portion of the outlet cannula itself surrounded by the upper support plate 32 (in particular by the first annular gasket 321). The free end 520 of the lower duct 52 is slidably inserted (substantially snugly), for example telescopically, in the free end 550 of the outlet cannula 55 (alternatively the outlet cannula 55 might be inserted internally of the conduit 52), so that the radial opening 521 and the radial window 551 are axially aligned with each other and are at least partially radially superposed.

In practice, the conduit 52 and the outlet cannula 55 are configured so that the conduit is mobile with the tank 51 between a first position - corresponding to the neared position of the tank 51 - in which the radial opening 521 is completely superposed on the radial window 551, and a second position - corresponding to the distanced position of the tank 51 - in which the radial opening 521 is only partially superposed on the radial window 551.

In practice, the radial opening 521 and the radial window 551 overall define a variable-section passage which connects the second chamber with the interior volume of the outlet cannula 55 and the conduit 52 (in the portion thereof downstream of the porous membrane 54).

When the tank 52 is in the neared position the section of the passage opening is at a maximum and substantially equal to the area of the radial opening 521 (or equivalently the radial window 551); when instead the tank 52 is in the distanced position the section of the passage opening is minimal (though not null), for example substantially equal to half the area of the radial opening 521 (or equivalently the radial window 551).

In light of the above description, the functioning of the filter assembly 10 according to the second embodiment is as follows.

The fluid to be filtered enters the casing 20 through the inlet 23 and fills the first chamber defined externally of the filter wall 31 and the tank 51.

The fluid in the first chamber is at a pressure P1 that depends on various operating parameters of the internal combustion engine.

The fluid is forced to flow through the filter wall 31 to be filtered and pass into the second chamber defined internally of the filter cartridge 30.

In this second chamber the fluid is at a pressure P2 lower than P1, by a quantity that depends, among other design parameters of the filter wall 31, also on the degree of clogging of the filter membrane itself.

In practice, the greater the degree of clogging of the filter wall 31, the greater the pressure difference (P1-P2) of the fluid between the first chamber and the second chamber.

From the second chamber the fluid flows through the radial window 551 and the radial opening 521 into a third chamber internal of the cannula 55, in which, because of the load loss imparted by the passage through the radial window and the radial opening, the filtered fluid is at a pressure P4 that is lower than P2.

The additive fluid that fills the tank 51 is at a pressure P3, which is normally substantially equal to P1.

Each time a pressure increase P1 is generated in the first chamber that is above a predeterminable pressure value, for example each time the filter wall 31 increases the degree of clogging thereof (thus increasing the pressure different P1-P2) and/or the fluid to be filtered increases the density and/or the flow rate thereof, this pressure increase causes a contraction of the tank 51 by a predetermined volume, which corresponds to the quantity of additive released into the filtered fluid across the porous membrane 54.

If the pressure increase P1 in the first chamber does not exceed a certain threshold value it is translated only into a contraction of the tank 51, as described above, causing the additive to exit as happens in the first embodiment of the filter assembly 10 described above.

If instead the pressure increase P1 in the first chamber exceeds a predetermined threshold value, i.e. is such as to overcome the mechanical resistance of the spring 60, the tank 51 is moved from the distanced position to the neared position with a consequent opening of the passage section of the radial opening 521 (and the radial window 551).

In this way, the pressure P4 of the fluid (with the additive added) in the cannula 55 increases, resulting in a decrease of the pressure difference P3-P4 astride of the porous membrane 54 (or valve), which limits the exit of additive from the reservoir 51 due to a re-balancing or balancing effect of the increase of the pressure difference P1-P2 astride of the filter wall 31.

In practice, by varying the passage section of the radial opening 521 (and the radial window 551) as a function of the pressure difference P1-P2 between the first chamber and the second chamber (either side of the filter media 31) it is possible to limit the fluctuations of the flow rate of additive delivered from the tank 51, which are due to the variation in the flow of incoming fluid into the casing 20 and/or the degree of clogging of the filter wall 31.

In practice, the variation of the passage section of the radial opening 521 (and the radial window 551) acts as an additional pressure drop for the fluid in transit between the inlet 23 and the outlet 24, in addition to the drop represented by the filter wall 31, which decreases as the pressure drop represented by the filter wall 31 increases, and vice versa, so as to generate a pressure difference P3-P4 either side of the substantially-constant porous membrane 54.

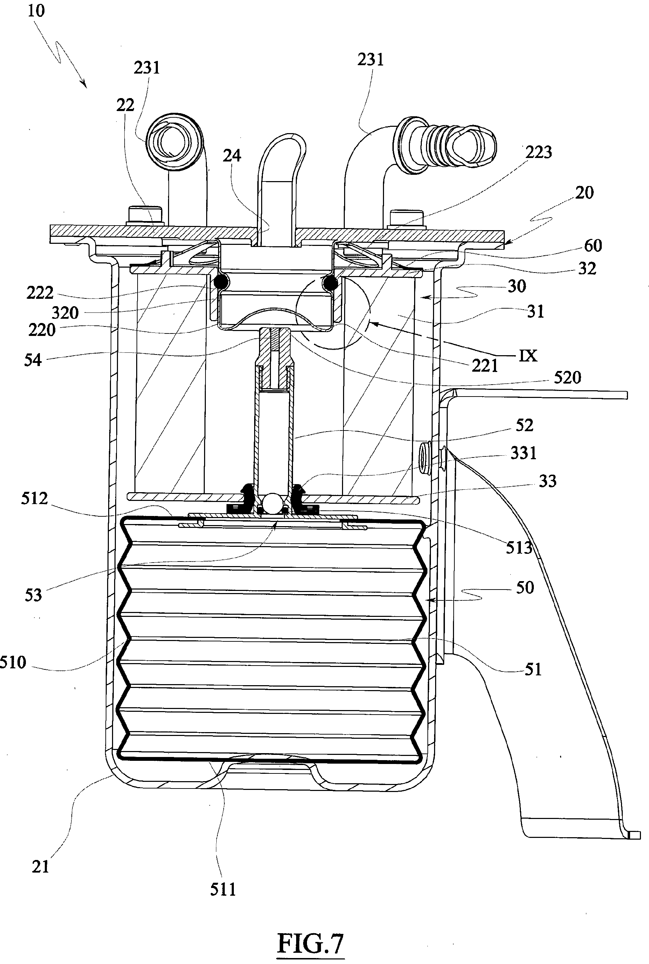

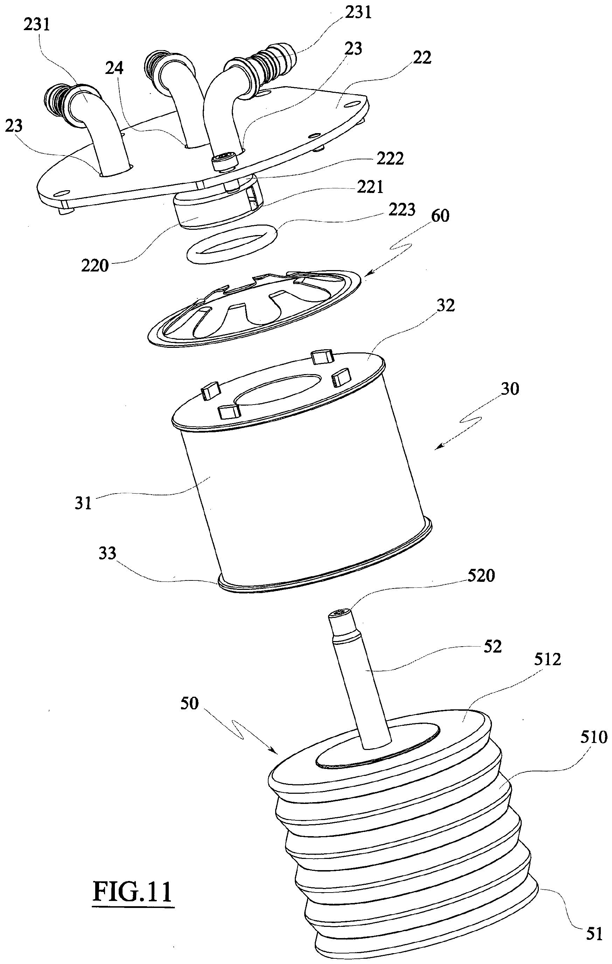

In a third embodiment, shown in figures 7 to 11, the filter group 10 comprises an external casing, indicated in its entirety by 20, which is formed by a substantially beaker-shaped body 21 closed at the top thereof by a lid 22, for example circular, and removably fixed to the beaker body 21 by means of blocking screws or other suitable blocking means.

The lid 22 comprises at least an inlet 23 (in the example 2 in number) for the fluid to be filtered, for example, each defined by an off-centre through-hole made in the lid, in which is sealedly engaged in an inlet cannula 231.

The lid 22 further comprises an outlet 24 for the fluid to be filtered, for example defined by a through-hole coaxial with the beaker body 21 and made in the lid.

In particular, the outlet 24 of the casing 20 has a variable section, as will more fully emerge in the following.

The lid 22 also comprises a central shank 220 that is internally hollow and branches inferiorly (internally of the beaker body 21).

The central shank 220 is substantially beaker-shaped with the upper edge closed by the cover 22 itself, as it is welded to it or made in a single piece with it. The bottom of the central shank 220 is closed, while the lateral wall thereof has a radial slot 221, for example an elongate slot with the longitudinal axis thereof substantially parallel to the axis of the beaker body 21. The lateral wall of the central shank 220 also includes an annular seating 222 for a seal ring 223 which is interposed axially between the upper edge of the central shank and the radial slot 221.

The output 24 flows directly into the internal volume of the central shank 220.

Inside the housing 20 is received a filter cartridge denoted by reference numeral 30.

The filter cartridge 30 includes a filter wall 31 of tubular shape, in this case a depth membrane (not excluding, however, the possibility of a pleated membrane), which delimits an internal through-cavity in which is inserted through a support core (not shown) provided with radial openings for the passage of diesel.

An external volume is defined between the filter wall 31 and the beaker body 21 that can be placed in communication with the inlet 23 of the fluid to be filtered. The filter wall 31 also delimits an internal volume placeable in communication with the outlet 24.

The filter cartridge 30 comprises two support plates, of annular shape, generally made of plastic, of which an upper support plate 32 and a lower support plate 33, which are coaxially fixed to the opposite ends of the filter wall 31. The upper support plate 32 includes a lowered inner edge 320 which extends coaxially and internally of the filter wall 31 over a limited axial length thereof, which can be inserted (fitted) substantially snugly and sealedly (by the seal ring 223) on the central shank 220.

In practice, the internal volume of the central tang 220 is set in communication with the second chamber (downstream of the filter media 31 in the crossing direction of the fluid) by means of the radial slot 221.

The lower support plate 33 comprises a third annular seal 331 able to surround the inner edge of the lower support plate 33.

A dispensing device is preferably but not limitingly housed internally of the casing 20, which device dispenses an additive for the fluid to be filtered, denoted in its entirety by reference number 50.

The dispensing device 50 is fixed to the filter cartridge 30, for example removably or glued thereto, as will more fully emerge in the following, and is therefore an added component of the filter cartridge (removable and insertable from and into the casing 20 together with it).

The dispensing device 50 comprises a variable-volume tank 51, for example with at least a collapsible wall 510, and is placeable, for example, inferiorly of the filter cartridge 50.

In practice, the reservoir 50 is substantially cylindrical and has a substantially-circular bottom wall 511 (or substantially rigid and non-deformable), for example provided with a filler opening closed by a closing element, a substantially-tubular lateral wall 510, which rises from the bottom wall 511 and is axially deformable, for example substantially bellows-shaped, and a top wall 512 (substantially rigid or deformable), which closes the upper lateral wall 510 and has a substantially annular shape, defining a central passage hole for the additive.

A gap is defined between the tank 50 (in particular the bottom wall 511 thereof) and the beaker body 21 (in particular the bottom wall thereof) which prolongs the first chamber is destined to be filled by the fluid to be filtered.

The top wall 512 is fixed coaxially to the lower support plate 33.

A hollow shank 513 extends from the top wall 512, which shank 513 axially prolongs the central hole of the top wall 512, which in turn is prolonged by a conduit 52, for example coaxial, open at the free end 520 and inserts into the first chamber by passing through the central hole of the lower support plate 32.

In practice, the conduit 52 sets the internal volume of the tank 51 in communication with the volume external thereof. The conduit 52 for example comprises a truncoconical tapered end (for example removable) prolonging a first base substantially-cylindrical section.

The first section of cylindrical base is insertable internally of the central hole of the lower support plate 33, in practice internally of the second annular seal 331, so as to compress the seal radially between the lower support plate 33 and the hollow shank 513.

A check valve 53 is arranged between the conduit 52 and the tank 51, in particular internally of the hollow shank 513, which check valve 53 comprises for example a ball obturator which is able to open, in contrast to elastic thrust means (not illustrated) or by simple force of gravity, to afford a passage which places the reservoir 51 and the conduit 52 in fluid communication only in the direction of exit from the tank.

The free end 520 of the conduit 52 is arrangeable internally of the second chamber, for example, below the bottom of the central shank 220.

The device 50 comprises a porous depth membrane 54 fixed to the conduit 52 and able to intercept the internal cavity thereof.

For porous depth membrane is intended every material comprising pores distributed on the depth of said material, wherein said pores communicate each other, creating narrow and tortuous paths, with a certain length, said paths passing said membrane; through said paths, the porous depth membrane can be crossed by a fluid, continuously, with a flow resistance (loss of pressure) resulting from the paths dimension and length, as well as from the pressure and viscosity of the fluid crossing the membrane.

The porous depth membrane can be realized in several ways and materials, for example it can be composed of a sintered plastic or metallic material or of a nonwoven comprising polymeric or metallic fibers.

Moreover, the porous depth membrane can comprise two or more layers, one in series of the other, wherein at least a layer comprises pores distributed on the depth of said material, wherein said pores communicate each other, creating narrow and tortuous paths, with a certain length, said paths passing said membrane; according to an alternative embodiment of the present invention, the porous depth membrane is composed of a monolithic body comprising pores distributed on the depth of said material, wherein said pores communicate each other, creating narrow and tortuous paths, with a certain length, said paths passing said membrane.

On the embodiments shown on figures, the porous membrane 54 is realized by a cylinder made of a porous material, for example, the height of which is greater than the radius of the base thereof.

In the preferred embodiments illustrated, the height of the porous membrane 54 is greater than the diameter of the base. For example, the material the porous membrane is made of is able to withstand temperatures of higher than 120-130 ° C. The porous membrane 54, in practice, is able to define a constant and limited passage for additive, micronized (i.e. in small droplets), which reduces the consumption and improves the dispersion in the filtered fluid and the efficiency thereof.

The porous membrane 54 is inserted internally of the conduit 52 and is fixed therein (for example by gluing the peripheral edge thereof to the inner walls of the conduit 52 or resting or gluing thereof on an annular shelf fashioned internally of the conduit itself).

For example, the porous membrane 54 is arranged at the free tapered end 520 of the conduit 52.

The porous membrane 54 is configured such as to generate a load loss in the additive that crosses the membrane 54 that is greater than the load loss generated in the fluid under filtration in the filter wall 31 of the filter cartridge 30. The device 50 of this third embodiment, alternatively to the porous membrane 54, may exhibit a valve, for example a check valve attached to the conduit 52, the obturator of which is destined to occlude the inner cavity thereof and to open in contrast to elastic means (a spring or elastic deformation of the obturator itself).

In practice, though in totally different operation modes, the porous membrane 54 and the valve are arranged such as to define means for controlling the outlet flow of additive from the duct 52, which are configured so as to generate a load loss in the additive that crosses that is greater than the pressure drop generated in the fluid under filtration in the filter-wall 31.

The filter group 10 includes means for varying the flow section of at least one from between the outlet 24 and the radial slot 221.

The example shows varying means (which will be detailed below) of the radial slot 221.

In practice, the inner edge 320 of the upper support plate 33 is able to radially superpose the radial slot 221, in order to partially occlude it.

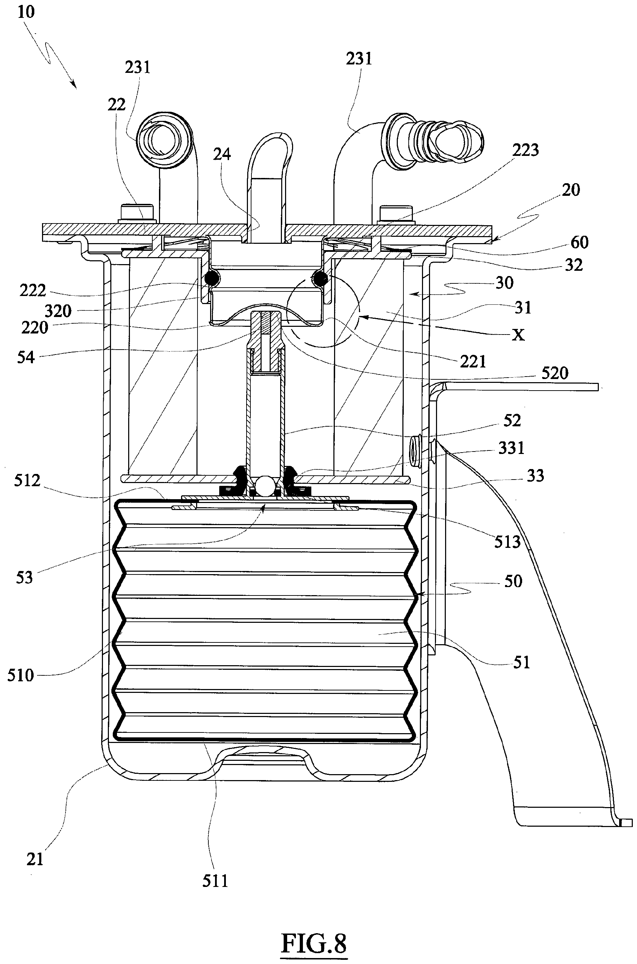

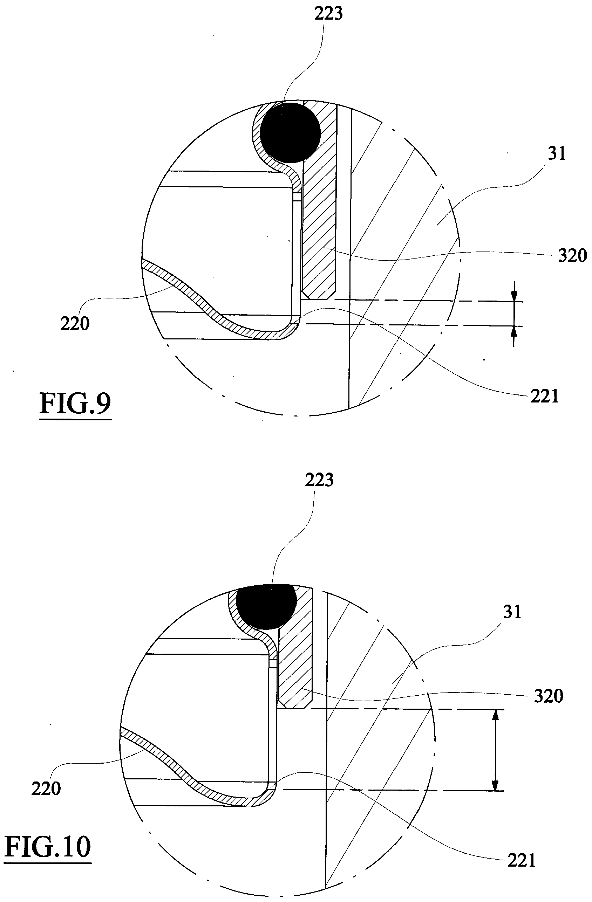

The filter cartridge 30 is slidably associated to the central shank 220 between a raised position, in which the inner edge 320 is able to superpose on a limited axial portion of the radial slot 221 (defining the maximum open section of the radial slot 221, as shown in figures 8 and 10), and a lowered position, in which the inner edge 320 is able to superpose on a greater axial section of the radial slot 221 (defining the minimum section open - in any case not nothing - of the radial slot 221, as shown in figures 7 and 9).

The filter group 10 also comprises elastic means, for example of a spring type (in the illustrated example a belleville washer 60), which are interposed between the upper support plate 32 and the lid 22; the filter cartridge 30 is, therefore, mobile from the lowered position to the raised position, in contrast to elastic means 60.

The disc spring 60 is, for example, of annular type, provided with a plurality of flexible blades that branch internally from a circular crown.

The spring 60 is interposed between the upper wall of the upper support plate 32 and the lower wall of the lid 22, in practice inserted on the central shank 220.

The filter cartridge 30 (both in the presence and absence of the delivery device 50), when it is moved from the lowered position to the raised position (in response to an increase in pressure of the fluid to be filtered upstream of the filter wall 31), is able to compress the spring 60 in contrast to the resistant force thereof and simultaneously expand the passage section of the radial slot 221, thereby decreasing the overall flow resistance of the group.

In the light of the foregoing description, the operation of the filtration assembly 10 according to the third embodiment is as follows.

The fluid to be filtered enters the casing 20 through each inlet 23 and fills the first chamber defined externally of the filter wall 31 and the tank 51.

The fluid in the first chamber is at a pressure P1 that depends on various operating parameters of the internal combustion engine.

The fluid is forced to flow through the filter wall 31 in order to be filtered and to move into the second chamber defined internally of the filter cartridge 30.

In this second chamber the fluid is at a pressure P2 lower than P1, by a quantity dependent, among other parameters constrictive project from the filter wall 31, also on the degree of clogging of the filter wall itself.

In practice, the greater the degree of clogging of the filter media 31, the greater the pressure difference (P1-P2) of the fluid between the first chamber and the second chamber.

The additive fluid that fills the tank 51 is located at a pressure P3, which is normally substantially equal to P1. Each time an increase of pressure P1 is generated in the first chamber that is higher than a determined pressure value, for example, whenever the filter wall 31 increases the degree of clogging thereof (and thus the pressure difference P1-P2 increases) and/or the fluid to be filtered increases the density and/or the flow rate thereof, this increase in pressure causes a contraction of the tank 51 by a given volume, which corresponds to an increase in the pressure P3 internal of the tank 51 and therefore to a quantity of additive released into the fluid filtered through the porous membrane 54.

If the increase of pressure P1 in the first chamber does not exceed a certain threshold value it is transformed only into a contraction of the tank 51, as described above.

If instead the pressure increase P1 in the first chamber exceeds a predetermined threshold value, i.e. is such as to overcome the mechanical resistance of the spring 60, the filter cartridge 30 (for example together with the tank 51) and is moved from the lowered position (of equilibrium) to the raised position with consequent opening of the passage section of the radial slot 221.

In this way, the pressure P4 of the fluid (with the additive added) in the inner volume of the central shank 220 increases, causing a decrease in the pressure difference P2-P4 between the second chamber and the interior volume of the central shank 220, which is transformed, for example, into a limitation of exit of additive from the tank 51 by an effect of re-balancing or a balancing of the increase of the pressure difference P1-P2 astride the filter media 31.

In practice, by varying the passage section of the radial slot 221 as a function of the pressure difference P1-P2 between the first chamber and the second chamber (straddling the filter media 31) it is possible to limit the fluctuations of the flow rate of additive delivered from the tank 51, which are due to the variation in the incoming fluid flow into the casing 20 and/or the degree of clogging of the filter wall 31.

In practice, the variation of the passage section of the radial slot 221 serves as a further load loss for the fluid in transit between the inlet 23 and the outlet 24, in addition to the filter wall 31, which decreases on the increase of the load loss represented by the filter wall 31, and vice versa, decreasing/optimizing the overall load losses of the filter group 10.

The invention as it is conceived is susceptible to numerous modifications and variations, all falling within the inventive concept.

Moreover, all the details can be replaced by other technically equivalent elements. In practice, the materials used, as well as the contingent shapes and dimensions, may be any according to requirements without thereby forsaking the scope of protection of the following claims.

## Claims

1. A dispensing device (50) of an additive for a filter groups (10) of internal combustion engines, comprising a variable-volume tank (51) able to contain an additive from which a conduit (52) for dispensing the additive branches, **characterised in that** it comprises at least a porous depth membrane (54) fixed internally of the conduit and able to intercept the flow of additive being dispensed from the tank (51).

2. The device (50) of claim 1, wherein the porous membrane (54) is constituted by a small cylinder of porous material a height of which is greater than a radius of the base.

3. The device (50) of claim 1, wherein the conduit (52) comprises at least a radial opening (521) interposed axially between the porous membrane (54) and a free end (520) of the conduit, the radial opening (521) having a variable section.

4. The device (50) of claim 3, wherein the conduit (52) is slidably inserted in a fixed cannula (55) provided with at least a radial window (551) able to be at least partially superposed on the radial opening (521), the conduit (52) being mobile with respect to the cannula (55) between a first position, in which the radial opening (521) is substantially completely superposed on the radial window (571), and a second position, in which the radial opening (521) is only partly superposed on the radial window (571), for varying the section of the radial opening (521).

5. A filter cartridge (30, 50) for filter groups for internal combustion engines, which comprises a filter wall (31) having a tubular shape, opposite ends of which are fixed to respective annular support plates (32, 33), **characterised in that** it comprises a dispensing device (50), according to one or more of the preceding claims, associated removably to at least one of the support plates (32, 33) such that the free end of the conduit (52) opens internally of the filter wall (31), the porous membrane (54) being configured such as to generate a load loss in the additive crossing the membrane (54) that is greater than a load loss generated in the fluid being filtered by the filter wall (31).

6. The filter cartridge (30, 50) of claim 5, wherein the conduit (52) comprises at least a radial opening (521) interposed axially between the porous membrane (54) and a free end (520) of the conduit, the radial opening (521) of the conduit (520) has a variable section and also opens internally of the filter wall (31).

7. The filter cartridge (30, 50) of claim 5, wherein the tank (51) comprises an annular abutment (512) provided with a salient hollow shank (513) from which the conduit (52) branches and which is inserted internally of one of the annular plates (33).

8. The filter cartridge (30, 50) of claim 7, wherein the annular abutment (512) is fixed to the annular plate (33).

9. The filter cartridge (30,50) of claim 7, wherein the hollow shank (513) is slidably inserted in one of the annular plates (33), the tank (51) being mobile, with the conduit (52), between a neared position, in which the annular abutment (513) is substantially neared to the annular plate (33), and a distanced position, in which the annular abutment (513) is substantially distanced from the annular plate (33).

10. The filter cartridge (30, 50) of claim 9, **characterised in that** it comprises elastic means (60) interposed between the annular abutment (513) and the annular plate (33), the tank (51) being mobile from the distanced position to the neared position in opposition to the elastic means (60).

11. The filter cartridge (30, 50) of claim 6 and 9, wherein the conduit (52) is slidably inserted in a fixed cannula (55) provided with at least a radial window (551) able to be at least partially superposed on the radial opening (521), and is mobile with respect to the cannula (55) between a first position, in which the radial opening (521) is substantially completely superposed on the radial window (571), and a second position, in which the radial opening (521) is only partly superposed on the radial window (571), for varying the section of the radial opening (521), and the cannula (55) is inserted internally of the other of the support plates (32) and is axially constrained thereto removably and substantially sealedly.

12. A filter group (10) comprising an external casing (20) provided with at least an inlet (23) for a fluid to be filtered, an outlet (24) for the filtered fluid and a filter cartridge (3, 50), according to one or more of claims from 5 to 11, contained internally of the casing (20) and able to divide the internal volume of the casing (20) into a first chamber external of the filter wall (31) and communicating with the inlet (23) and a second chamber internal of the filter wall (31) and communicating with the outlet (24), the tank (51) being contained in the first chamber.

13. The filter group (10) of claim 12, wherein the outlet (24) exhibits a variable section.

14. The filter group (10) of claim 12, wherein the conduit (52) comprises at least a radial opening (521) interposed axially between the porous membrane (54) and a free end (520) of the conduit, the radial opening (521) has a variable section and is slidably inserted in a fixed cannula (55) provided with at least a radial window (551) able to be at least partially superposed on the radial opening (521), the conduit (52) being mobile with respect to the cannula (55) between a first position, in which the radial opening (521) is substantially completely superposed on the radial window (571), and a second position, in which the radial opening (521) is only partly superposed on the radial window (571), for varying the section of the radial opening (521), and the conduit (52) and the cannula (55) define a channel communicating with the outlet (24) of the casing (20).

## Patentansprüche

1. Vorrichtung zum Abgeben (50) eines Additivs für Filtergruppen (10) von Verbrennungsmotoren, umfassend einen volumenvariablen Behälter (51), der in der Lage ist, ein Additiv zu enthalten, von dem eine Leitung (52) zum Abgeben des Additivs abzweigt, **dadurch gekennzeichnet, dass** sie wenigstens eine poröse Tiefenmembran (54) umfasst, die im Inneren der Leitung befestigt und in der Lage ist, den Strom des aus dem Behälter (51) abgegebenen Additivs zu unterbrechen.

2. Vorrichtung (50) nach Anspruch 1, wobei die poröse Membran (54) aus einem kleinen Zylinder aus porösem Material besteht, dessen Höhe größer als der Radius der Grundfläche ist.

3. Vorrichtung (50) nach Anspruch 1, wobei die Leitung (52) wenigstens eine radiale Öffnung (521) umfasst, die axial zwischen der porösen Membran (54) und einem freien Ende (520) der Leitung eingefügt ist, wobei die radiale Öffnung (521) einen variablen Querschnitt aufweist.

4. Vorrichtung (50) nach Anspruch 3, wobei die Leitung (52) in einem festen Röhrchen (55) gleitbar eingeschoben ist, das mit wenigstens einem radialen Fenster (551) versehen ist, das in der Lage ist, die radiale Öffnung (521) wenigstens teilweise zu überlappen, wobei die Leitung (52) in Bezug auf das Röhrchen (55) zwischen einer ersten Position, in der die radiale Öffnung (521) im Wesentlichen vollständig das radiale Fenster (571) überlappt, und einer zweiten Position, in der die radiale Öffnung (521) das radiale Fenster (571) nur teilweise überlappt, bewegbar ist, um den Querschnitt der radialen Öffnung (521) zu variieren.

5. Filterkartusche (30, 50) für Filtergruppen für Verbrennungsmotoren, die eine röhrenförmige Filterwand (31) umfasst, deren gegenüberliegende Enden an jeweiligen ringförmigen Stützplatten (32, 33) befestigt sind, **dadurch gekennzeichnet, dass** sie eine Abgabevorrichtung (50) nach einem oder mehreren der vorstehenden Ansprüche umfasst, die abnehmbar mit wenigstens einer der Stützplatten (32, 33) verbunden ist, derart, dass das freie Ende der Leitung (52) ins Innere der Filterwand (31) einmündet, wobei die poröse Membran (54) derart ausgebildet ist, dass ein Druckverlust in dem durch die Membran (54) strömenden Additiv erzeugt wird, der größer ist als der Druckverlust, der in dem durch die Filterwand (31) gefilterten Fluid erzeugt wird.

6. Filterkartusche (30, 50) nach Anspruch 5, wobei die Leitung (52) wenigstens eine radiale Öffnung (521) umfasst, die axial zwischen der porösen Membran (54) und einem freien Ende (520) der Leitung eingefügt ist, wobei die radiale Öffnung (521) der Leitung (520) einen variablen Querschnitt aufweist und ebenfalls ins Innere der Filterwand (31) einmündet.

7. Filterkartusche (30, 50) nach Anspruch 5, wobei der Behälter (51) ein ringförmiges Widerlager (512) umfasst, das mit einem vorspringenden Hohlschaft (513) versehen ist, von dem die Leitung (52) abzweigt und der ins Innere von einer der ringförmigen Platten (33) eingefügt ist.

8. Filterkartusche (30, 50) nach Anspruch 7, wobei das ringförmige Widerlager (512) an der ringförmigen Platte (33) befestigt ist.

9. Filterkartusche (30,50) nach Anspruch 7, wobei der Hohlschaft (513) in eine der ringförmigen Platten (33) gleitbar eingeschoben ist, wobei der Behälter (51) mit der Leitung (52) bewegbar ist zwischen einer angenäherten Position, in der das ringförmige Widerlager (513) im Wesentlichen der ringförmigen Platte (33) angenähert ist, und einer entfernten Position, in der das ringförmige Widerlager (513) im Wesentlichen von der ringförmigen Platte (33) entfernt ist.

10. Filterkartusche (30, 50) nach Anspruch 9, **dadurch gekennzeichnet, dass** sie elastische Mittel (60) umfasst, die zwischen dem ringförmigen Widerlager (513) und der ringförmigen Platte (33) eingefügt sind, wobei der Behälter (51) von der entfernten Position zur angenäherten Position gegen die Wirkung der elastischen Mittel (60) bewegbar ist.

11. Filterkartusche (30, 50) nach Anspruch 6 und 9, wobei die Leitung (52) in einem festen Röhrchen (55) gleitbar eingeschoben ist, das mit wenigstens einem radialen Fenster (551) versehen ist, das in der Lage ist, die radiale Öffnung (521) wenigstens teilweise zu überlappen und in Bezug auf das Röhrchen (55) bewegbar ist zwischen einer ersten Position, in der die radiale Öffnung (521) im Wesentlichen vollständig das radiale Fenster (571) überlappt, und einer zweiten Position, in der die radiale Öffnung (521) das radiale Fenster (571) nur teilweise überlappt, um den Querschnitt der radialen Öffnung (521) zu variieren, und wobei das Röhrchen (55) ins Innere des anderen der Stützplatten (32) eingefügt und abnehmbar sowie im Wesentlichen abgedichtet damit axial verbunden ist.

12. Filtergruppe (10) umfassend ein äußeres Gehäuse (20), das versehen ist mit wenigstens einem Einlass (23) für ein zu filterndes Fluid, einem Auslass (24) für das gefilterte Fluid und einer Filterkartusche (3, 50) nach einem oder mehreren der Ansprüche 5 bis 11, die im Inneren des Gehäuses (20) enthalten und in der Lage ist, das innere Volumen des Gehäuses (20) in eine erste Kammer zu unterteilen, die sich außerhalb der Filterwand (31) befindet und mit dem Einlass (23) in Verbindung steht, und in eine zweite Kammer, die sich innerhalb der Filterwand (31) befindet und mit dem Auslass (24) in Verbindung steht, wobei der Behälter (51) in der ersten Kammer enthalten ist.

13. Filtergruppe (10) nach Anspruch 12, wobei der Auslass (24) einen variablen Querschnitt aufweist.

14. Filtergruppe (10) nach Anspruch 12, wobei die Leitung (52) wenigstens eine radiale Öffnung (521) umfasst, die axial zwischen der porösen Membran (54) und einem freien Ende (520) der Leitung eingefügt ist, die radiale Öffnung (521) einen variablen Querschnitt aufweist und in einem festen Röhrchen (55) gleitbar eingeschoben ist, das mit wenigstens einem radialen Fenster (551) versehen ist, das in der Lage ist, wenigstens teilweise die radiale Öffnung (521) zu überlappen, wobei die Leitung (52) in Bezug auf das Röhrchen (55) bewegbar ist zwischen einer ersten Position, in der die radiale Öffnung (521) im Wesentlichen vollständig das radiale Fenster (571) überlappt, und einer zweiten Position, in der die radiale Öffnung (521) das radiale Fenster (571) nur teilweise überlappt, um den Querschnitt der radialen Öffnung (521) zu variieren und wobei die Leitung (52) und das Röhrchen (55) einen mit dem Auslass (24) des Gehäuses (20) in Verbindung stehenden Kanal definieren.

## Revendications

1. Dispositif distributeur (50) d'un additif pour un groupe de filtrage (10) de moteurs à combustion interne, comprenant un réservoir à volume variable (51) adapté pour contenir un additif à partir duquel dérive un conduit (52) pour la distribution de l'additif, **caractérisé en ce qu'**il comprend au moins une membrane poreuse de profondeur (54) fixée à l'intérieur du conduit et adaptée pour intercepter le flux d'additif qui est distribué à partir du réservoir (51).

2. Dispositif (50) selon la revendication 1, dans lequel la membrane poreuse (54) est constituée par un petit cylindre de matériau poreux dont la hauteur est supérieure à un rayon de la base.

3. Dispositif (50) selon la revendication 1, dans lequel le conduit (52) comprend au moins une ouverture radiale (521) interposée axialement entre la membrane poreuse (54) et une extrémité libre (520) du conduit, l'ouverture radiale (521) ayant une section variable.

4. Dispositif (50) selon la revendication 3, dans lequel le conduit (52) est inséré de manière coulissante dans une canule fixe (55) munie d'au moins une fenêtre radiale (551) adaptée pour être superposée au moins partiellement sur l'ouverture radiale (521), le conduit (52) étant mobile par rapport à la canule (55) entre une première position, dans laquelle l'ouverture radiale (521) est sensiblement complètement superposée sur la fenêtre radiale (571), et une deuxième position, dans laquelle l'ouverture radiale (521) est superposée seulement partiellement sur la fenêtre radiale (571), pour faire varier la section de l'ouverture radiale (521).

5. Cartouche filtrante (30, 50) pour des groupes de filtrage pour des moteurs à combustion interne, qui comprend une paroi filtrante (31) ayant une forme tubulaire, dont des extrémités opposées sont fixées à des plaques de support annulaires respectives (32, 33), **caractérisée en ce qu'**elle comprend un dispositif distributeur (50), selon une ou plusieurs des revendications précédentes, associé de manière amovible à au moins une des plaques de support (32, 33) de manière que l'extrémité libre du conduit (52) débouche à l'intérieur de la paroi filtrante (31), la membrane poreuse (54) étant configurée de manière à générer une perte de charge dans l'additif traversant la membrane (54) qui est supérieure à une perte de charge générée dans le fluide qui est filtré par la paroi filtrante (31).

6. Cartouche filtrante (30, 50) selon la revendication 5, dans laquelle le conduit (52) comprend au moins une ouverture radiale (521) interposée axialement entre la membrane poreuse (54) et une extrémité libre (520) du conduit, l'ouverture radiale (521) du conduit (520) a une section variable et débouche également à l'intérieur de la paroi filtrante (31).

7. Cartouche filtrante (30, 50) selon la revendication 5, dans laquelle le réservoir (51) comprend une butée annulaire (512) munie d'une tige creuse saillante (513) à partir de laquelle le conduit (52) dérive et qui est insérée à l'intérieur d'une des plaques annulaires (33).

8. Cartouche filtrante (30, 50) selon la revendication 7, dans laquelle la butée annulaire (512) est fixée à la plaque annulaire (33).

9. Cartouche filtrante (30,50) selon la revendication 7, dans laquelle la tige creuse (513) est insérée de manière coulissante dans une des plaque annulaires (33), le réservoir (51) étant mobile, avec le conduit (52), entre une position rapprochée, dans laquelle la butée annulaire (513) est sensiblement rapprochée de la plaque annulaire (33), et une position éloignée, dans laquelle la butée annulaire (513) est sensiblement éloignée de la plaque annulaire (33).

10. Cartouche filtrante (30, 50) selon la revendication 9, **caractérisée en ce qu'**elle comprend des moyens élastiques (60) interposés entre la butée annulaire (513) et la plaque annulaire (33), le réservoir (51) étant mobile de la position éloignée à la position rapprochée en opposition aux moyens élastiques (60).

11. Cartouche filtrante (30, 50) selon les revendications 6 et 9, dans laquelle le conduit (52) est inséré de manière coulissante dans une canule fixe (55) munie d'au moins une fenêtre radiale (551) adaptée pour être superposée au moins partiellement sur l'ouverture radiale (521) et est mobile par rapport à la canule (55) entre une première position, dans laquelle l'ouverture radiale (521) est sensiblement complètement superposée sur la fenêtre radiale (571), et une deuxième position, dans laquelle l'ouverture radiale (521) est superposée seulement partiellement sur la fenêtre radiale (571), pour faire varier la section de l'ouverture radiale (521), et la canule (55) est insérée à l'intérieur de l'autre des plaques de support (32) et est fixée axialement à celle-ci de manière amovible et sensiblement étanche.

12. Groupe de filtrage (10) comprenant un boîtier externe (20) muni d'au moins une entrée (23) pour un fluide à filtrer, une sortie (24) pour le fluide filtré et une cartouche filtrante (3, 50), selon une ou plusieurs des revendications 5 à 11, contenu à l'intérieur du boîtier (20) et adaptée pour diviser le volume interne du boîtier (20) en une première chambre externe à la paroi filtrante (31) et communiquant avec l'entrée (23) et une deuxième chambre interne à la paroi filtrante (31) et communiquant avec la sortie (24), le réservoir (51) étant contenu dans la première chambre.

13. Groupe de filtrage (10) selon la revendication 12, dans lequel la sortie (24) présente une section variable.

14. Groupe de filtrage (10) selon la revendication 12, dans lequel le conduit (52) comprend au moins une ouverture radiale (521) interposée axialement entre la membrane poreuse (54) et une extrémité libre (520) du conduit, l'ouverture radiale (521) a une section variable et est insérée de manière coulissante dans une canule fixe (55) munie d'au moins une fenêtre radiale (551) adaptée pour être superposée au moins partiellement sur l'ouverture radiale (521), le conduit (52) étant mobile par rapport à la canule (55) entre une première position, dans laquelle l'ouverture radiale (521) est sensiblement complètement superposée sur la fenêtre radiale (571), et une deuxième position, dans laquelle l'ouverture radiale (521) est superposée seulement partiellement sur la fenêtre radiale (571), pour faire varier la section de l'ouverture radiale (521), et le conduit (52) et la canule (55) définissent un canal communiquant avec la sortie (24) du boîtier (20).
